# FASCICULE DE BREVET EUROPEEN

(11) **EP 1 497 104 B1**
(45) Date de publication et mention de la délivrance du brevet: **03.09.2014**
(21) Numéro de dépôt: 03747158.8
(22) Date de dépôt: 24.04.2003
(51) Int. Cl.: B29C 70/50, B29B 15/12

(54) **PROCEDE DE FABRICATION D'UN NOUVEAU MATERIAU COMPOSE DE FAISCEAUX DE FIBRES NATURELLES PRE IMPREGNEES DE RESINE ORGANIQUE ET SE PRESENTANT SOUS FORME DE FIL OU DE RUBAN, DISPOSITIF POUR LA MISE EN OEUVRE DU PROCEDE ET PRODUIT OBTENU**
VERFAHREN ZUR HERSTELLUNG EINES NEUEN MATERIALS MIT NATURFASERBÜNDELN, DIE MIT ORGANISCHEM HARZ VORIMPRÄGNIERT SIND UND DIE FORM EINES GARNS ODER BANDS EINNEHMEN, VORRICHTUNG ZUM AUSFÜHREN DES VERFAHRENS UND ERHALTENES PRODUKT
METHOD OF PRODUCING A NOVEL MATERIAL COMPRISING NATURAL FIBRE BUNDLES THAT ARE PRE-IMPREGNATED WITH ORGANIC RESIN AND TAKING THE FORM OF A YARN OR RIBBON, APPARATUS FOR CARRYING OUT THE METHOD AND PRODUCT OBTAINED

(30) Priorité: 25.04.2002 FR 0205181
(43) Date de publication de la demande: 19.01.2005
(73) Titulaire: Dehondt, Guy, 76170 Auberville La Campagne (FR)
(72) Inventeur: Dehondt, Guy, 76170 Auberville La Campagne (FR)
(74) Mandataire: Zimmermann, Alain
(86) Numéro de dépôt international: PCT/FR2003/001296
(87) Numéro de publication internationale: WO 2003/091006

(56) Documents cités:
- EP-A- 0 434 564
- EP-A- 0 822 056
- WO-A-90/11170
- US-A- 5 376 412

## Description

L'invention concerne la fabrication d'un matériau composite se présentant sous la forme d'un fil ou d'un ruban de renforcement composé de fibres naturelles et d'une matrice en matière organique.

L'utilisation des fibres naturelles associées à des résines thermoplastiques a trouvé des applications industrielles dans le domaine des matériaux composites. L'emploi de ces fibres est avantageux de part leur faible densité, leur faible coût et leur caractéristique écologique. De nouvelles perspectives d'utilisation de ce matériau recyclable se sont donc imposées car les fibres naturelles sont biodégradables et peuvent donc conduire à des applications composites spécifiques lors de leur association avec des polymères thermoplastiques recyclables.

D'une manière très générale, la conception d'une structure en matériaux composites composée d'un renfort et d'une matrice se fait avec les objectifs suivants : la recherche de bonnes propriétés mécaniques et des coûts de fabrication et de maintenance les plus intéressants possibles. Le cycle de vie du matériau est un aspect qui peut également être pris en compte. Il doit respecter les réglementations environnementales en vigueur selon les pays.

Les résines thermoplastiques offrent pour leur part de nombreux avantages : coût de procédé et des matières premières (très répandues), facilité de mise en forme et aspect recyclnbilité / biodégradabilité.

La fibre de verre est le renfort le plus utilisé dans toute l'industrie du composite. Elle a un rapport performance / prix excellent, c'est pourquoi on la retrouve dans les premières applications avec thermoplastique. Toutefois pour certaines applications, cette fibre souffre dune faible résistance à l'abrasion et elle irrite la peau lors de la manipulation, en outre elle est difficilement recyclable.

C'est alors que les fibres naturelles ont joué leurs atouts. En effet, elles sont naturelles, donc renouvelables. Elles ne sont pas abrasives, facilement recyclables et ne présentent pas de danger pour la santé.

Sur le marché, il existe plusieurs fibres cellulosiques telles que les fibres de jute, de sisal, de lin et de chanvre. Si nous prenons le cas des fibres de lin, elles présentent de très bonnes caractéristiques mécaniques et une faible densité. En effet, leur densité est d'environ 1.2, soit deux fois plus faible que celle des fibres de verre. Du fait que les fibres de lin soient fibres naturelles, elles sont biodégradables, faciles à recycler et ne produisent pas de fumées toxiques lors de leur combustion.

Le lin associé à une résine thermoplastique est déjà utilisé sur le marché des composites pour ses qualités thermiques et acoustiques dans les domaines par exemple de l'automobile et du bâtiment. En général, les industriels utilisent les fibres courtes (rebus) qui ne sont pas employées dans l'industrie textile du lin et le renfort élaboré est non tissé (mat). Ce produit est constitué de filaments, de fibres discontinues et maintenues ensemble sous forme de nappe.

On connaît d'après la demande de brevet WO0006650 un procédé de fabrication de matériaux composites en soumettant une matière végétale contenant des fibres, ou un mélange de telles matières végétales, à au moins une étape de traitement thermoplastique, telle qu'une extrusion, un moulage par compression, un moulage par injection, un moulage sous vide ou un soufflage de feuille mince.

Egalement, on connaît d'après la demande de brevet FR2781492 un nouveau matériau thermoplastique composite contenant des fibres d'origine végétale et son procédé de fabrication. Dans ce nouveau matériau thermoplastique composite, la matière thermoplastique est dépourvue d'atomes de chlore et de radicaux phtalyle et les fibres d'origine végétales utilisées sont des fibres de lin et/ou de chanvre. Un des matériaux les plus utilisés est le mat de lin associée à une matrice polypropylène. Cette résine est la plus utilisée dans l'automobile, avec des températures de transformation compatibles avec les fibres végétales. Le procédé actuellement le plus employé est la thermo-compression, avec une limitation dans les formes et une limitation dans l'intégration des fonctions (insert). De nouvelles applications s'orientent vers le procédé d'injection avec l'utilisation de granulés polypropylène - fibre végétale.

Les études comparatives sont essentiellement menées avec les composites à base de fibres de verre, mais uniquement sous forme non tissée, ce qui limite leur champ d'application.

Le document EP-A-822056 décrit un procédé pour la fabrication d'un fil composite à base de fibres de renforcement naturelles et de matière organique thermoplastique.

La présente invention a pour but de proposer un procédé de fabrication d'un matériau composite à base de fibres de renforcement naturelles et de matière organique thermoplastique.

Plus particulièrement, l'invention permet grâce à ce procédé de fabriquer un produit se présentant sous la forme d'un fil ou d'un ruban solide et souple, de forme calibrée, et constitué de fils discontinus de renforcement agencés de manière parallèle et alternée les uns contre les autres, selon un taux de matière fibreuse et une cadence contrôlés, et solidarisés entre eux par de la matière thermoplastique d'origine synthétique ou naturelle pour réaliser une continuité transversale.

Selon l'invention, le procédé de fabrication du fil ou du ruban est caractérisé en ce que :
- on entraîne et on rassemble de manière parallèle et alternée les tiges alignées, après leur avoir retirée leur capsule;
- on fait pénétrer le faisceau de tiges alignées dans une zone où il subit une phase de séparation de la matière fibreuse et du bois que constituent chaque tige;
- on fait passer le faisceau dans un dispositif d'imprégnation, tout en maintenant la température de malléabilité de la matière thermoplastique, pour répartir de manière homogène la matière thermoplastique fondue et garantir la totale imprégnation des fibres de renforcement par celle-ci;
- on introduit le faisceau dans un dispositif de conformation, tout en maintenant sa température à une température de malléabilité de la matière thermoplastique, de manière à obtenir un fil ou un ruban constitué par le rapprochement en contigu des filaments formant une continuité transversale;
- on refroidit le fil ou le ruban pour solidariser les filaments entre eux en figeant la matière thermoplastique et on fixe ses caractéristiques dimensionnelles pour délivrer ledit fil ou ruban composite de l'invention.

Selon une caractéristique, le nouveau matériau revendiqué dans la revendication 11 est constitué d'un ensemble de matières fibreuses agencées en un faisceau ordonné, après alignement et alternance des filaments, et imprégné d'une matière thermoplastique.

Selon une autre caractéristique, le procédé consiste à dévider une grosse boule de pailles constituée de tiges alignées de fibres végétales, et à conditionner le nouveau matériau sous forme de bobines.

Quant au dispositif de mise en oeuvre du procédé, il est caractérisé en ce qu'il comprend :
- des moyens pour entraîner et des moyens pour rassembler sous forme de faisceau les filaments discontinus constitués de tiges de renforcement naturel;
- des moyens pour séparer le faisceau en matière fibreuse et en particules de bois;
- des moyens pour imprégner de matière thermoplastique le faisceau constitué uniquement de la matière fibreuse et chauffer de façon à répartir de manière homogène la matière thermoplastique fondue et à garantir la totale imprégnation des filaments de renforcement par celle-ci;
- un dispositif de conformation du faisceau de manière à le transformer en un fil ou un ruban;
- une calandre de refroidissement du fil ou du ruban permettant de figer la matière thermoplastique et de solidariser les filaments entre eux et former le fil ou le ruban définitif.

Selon une caractéristique, le dispositif comprend des moyens supplémentaires de chauffage de manière à garder malléable la matière thermoplastique du faisceau après le passage de celui-ci dans le dispositif d'imprégnation.

Selon une autre caractéristique, les moyens de rassemblement et d'alignement du dispositif consistent en un système permettant un alignement parallèle et alterné des tiges selon des espaces réguliers, et des moyens de régulations de tension des filaments sont prévus en amont des moyens de rassemblement.

Selon une caractéristique, le dispositif de séparation comprend une cellule de vapocraquage permettant le fractionnement à haute pression des constituants du faisceau.

Selon une autre caractéristique, le dispositif de séparation comprend une cellule de cryogénie. Nous reprenons pour cela les travaux développés d'après le brevet EP 90403704.1.

Selon une autre caractéristique, le dispositif de séparation se décompose en une suite d'actions mécaniques (teillage).

Selon une caractéristique, le dispositif d'imprégnation comporte une cellule de pulvérisation se décomposant en une atomisation de la résine en fines gouttelettes sur la surface du faisceau.

Selon une autre caractéristique, le dispositif d'imprégnation consiste à alimenter en filaments ou granulés de matière organique le faisceau et à chauffer de façon à répartir de manière homogène la matière thermoplastique fondue.

Selon une autre caractéristique, nous pouvons choisir des résines synthétiques telles que le polypropylène (PP) ou le polyester-amide (PEA).

Selon une autre caractéristique, nous pouvons également choisir des résines naturelles à base d'amidon, telles que l'huile de lin associée à un agent chimique. Nous reprenons pour cela les travaux développés d'après le brevet WO9961526.

Selon une autre caractéristique, le dispositif de conformation comporte un système de calibrage, le faisceau étant concentré autour de l'axe central de défilement pour délivrer un fil ou un ruban présentant une association contiguë des filaments les uns contres les autres.

D'autres avantages et caractéristiques vont à présent être décrits en regard des dessins sur lesquels:
- la figure 1 est une vue schématique globale du procédé de fabrication du fil ou du ruban selon l'invention;
- la figure 2 reprend une vue schématique détaillée de l'ensemble du procédé;

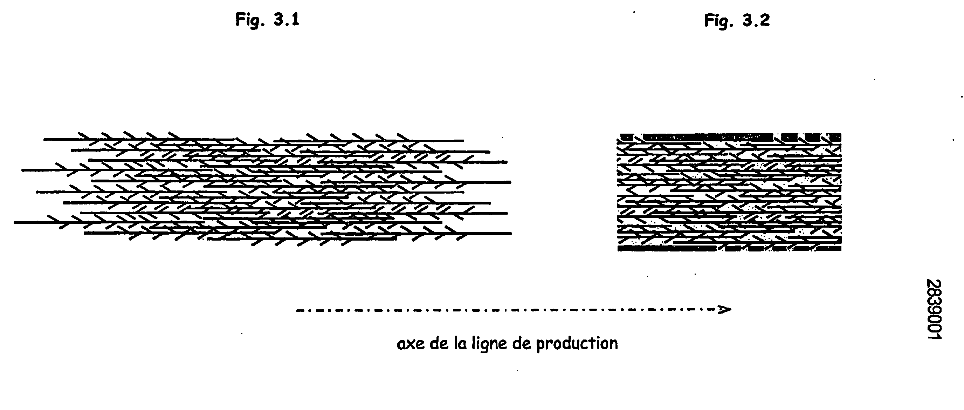

- la figure 3.1 est une vue schématique d'une portion d'un faisceau de fibres végétales alignées avant la phase d'imprégnation;
- la figure 3.2 est une vue schématique d'une portion d'un faisceau pré imprégné de matière thermoplastique.

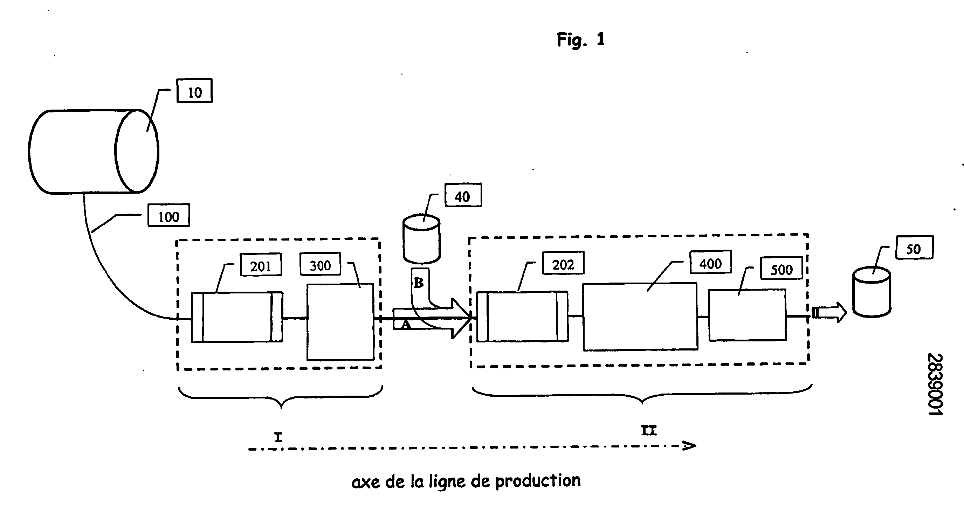

Le dispositif 1 visible à la figure 1 permet la fabrication d'un fil ou d'un ruban 50 conforme à l'invention qui présente une forme calibrée et est constituée d'une multiplicité de tiges, issues de la grosse boule de pailles 10, parallèles et rassemblées de manière contiguë les unes contre les autres. Chaque fil ou ruban, est constitué par des faisceaux de fibres naturelles et d'une matrice en matière organique thermoplastique de type synthétique ou à base d'amidon. Afin de définir une qualité du faisceau la plus rigoureuse possible, les modalités d'assemblage peuvent être modulées de façon à agir sur le nombre de filaments, dans un fil de base, donc finalement sur la densité linéaire. La densité linénire, s'exprimant en tex conformément à la norme internationale ISO 1144, le tex étant le poids en grammes de 1000 mètres de fil. Le produit obtenu permet ainsi de disposer d'un calibrage des fils ou des rubans selon un nombre de tex bien identifié.

Le dispositif de fabrication 1 comprend, sous forme d'une ligne et d'amont en aval, un dispositif de séparation capsule / tige 100, un premier bloc I regroupant un dispositif de pré arrangement en faisceau 201 et un dispositif de séparation faisceau / bois 300, une possibilité d'orienter un premier produit vers deux filières A ou B, un second bloc II regroupant un dispositif d'alignement en faisceau 202, un dispositif de mélange faisceau / matrice thermoplastique 400 et un dispositif de conformation du faisceau 500, et un banc de tirage. Comme présenté, une possibilité permet d'orienter en cours de procédé selon deux filières A ou B. La filière A reprend la ligne de production suivant l'invention, quant à la filière B, elle représente un apport sous forme de bobines de faisceau séparé du bois.

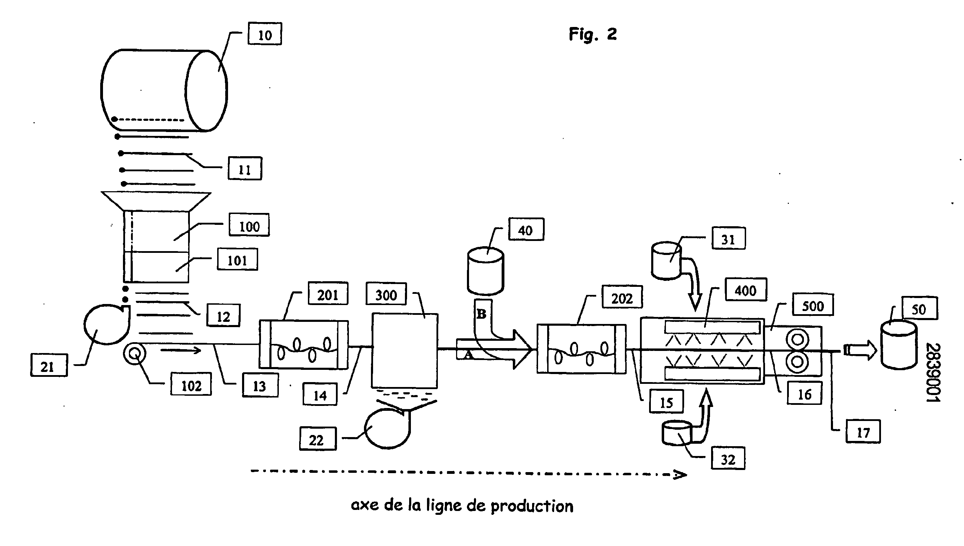

Le dispositif 1 est détaillé sur la figure 2. Nous retrouvons la filière d'approvisionnement avec les tiges dans leur état brut 11. Le dispositif de séparation capsule / tige 100 est couplé à un système d'orientation et de répartition des tiges 101. Nous obtenons ainsi une tige décortiquée de sa capsule 12. Un système de recyclage des capsules 21 permet de recueillir l'ensemble des capsules.

Les tiges sont ensuite disposées en chevauchement contrôlé 13 sur un tapis roulant avec son système d'alimentation 102.

Le premier bloc I est alors composé d'un dispositif de pré arrangement en faisceau 201. Nous obtenons ainsi le faisceau dans son état brut 14, constitué d'un ensemble de filaments de fibres naturelles. Ensuite, ce faisceau alimente un dispositif de séparation faisceau / bois 300, comprenant une cellule de fractionnement des constituants du faisceau. Un système de recyclage du bois 22 permet une récupération des particules de bois.

Selon l'orientation en filière B, un apport sous forme de bobines de faisceau séparé du bois 40 est proposé.

Selon l'orientation en filière A, nous reprenons la ligne définie selon l'invention par le second bloc II. Un dispositif d'alignement en faisceau 202 permet d'obtenir un faisceau séparé du bois 15. Ensuite se présente le dispositif de mélange faisceau / matrice thermoplastique 400. Celui-ci est constitué d'une première partie de chauffage et d'une seconde partie d'imprégnntion. L'apport de la matrice s'effectue selon deux filières, l'une correspondant à un apport externe de la matière thermoplastique (polypropylène, amidon, ...) 31, l'autre correspondant à un complément d'apport interne à base d'amidon 32.

Le faisceau ainsi pré imprégné 16 est ensuite refroidi et calibré dans un dispositif de conformation du faisceau 500.

Le faisceau calibré 17 est enfin conditionné sous forme de bobines constituées de fil ou de ruban 50.

A partir de ce matériau, on pourra utiliser les techniques de mise en forme de matériaux composites basées notamment sur le thermoformage soit sous presse, soit sous vessie, sur l'enroulement filamentaire et sur la pultrusion.

Dans le cas du thermoformage sous vessie, le matériau se présente comme un agencement de couches de renforcement ou de tricot pré confectionnés obtenu à partir du matériau (par tissage ou tricotage). Ce procédé s'inspire en grande partie des techniques RTM (Resin Tronsfer Molding) et VARI (Vaccum Assisted Resin Infusion).

Dans le cas de l'enroulement filamentaire, le matériau se présente sous forme de fil ou de ruban issu directement de la fabrication du nouveau matériau. Il est en effet possible de réaliser des tresses par tissage cylindrique ou conique d'un tissu tubulaire. Les fils s'entrecroisent en hélice, dont la variation du pas permet d'ajuster la tresse à la forme qu'elle doit recouvrir. Il est ainsi possible de réaliser une pièce de révolution ayant un diamètre variable le long de son arc. Par ce procédé, divers tissus peuvent être obtenus en forme de "chaussettes" coniques ou autres.

Dans le cas de la pultrusion, nous reprenons les applications classiques pour la réalisation de profilés.

Le matériau ainsi élaboré, pourra être utilisé dans plusieurs applications industrielles avec un double intérêt en terme de performance :
- des caractéristiques élevées en terme de performances mécaniques du fil ou du ruban;
- une optimisation de l'orientation du matériau dans la structure en fonction des caractéristiques mécaniques souhaitées.

Ce matériau pourra également s'orienter vers des applications multimatériaux (verre / fibres végétales), ainsi que sur des applications impliquant soit une tenue au feu part l'apport d'agent d'ignifugation, soit une tenue à l'impact.

## Revendications

1. Procédé de fabrication d'un fil ou d'un ruban composite (50) à base de fibres de renforcement naturelles (10) et de matière organique thermoplastique (31 ou 32), consistant à pré imprégner et à solidariser entre eux une multiplicité de fils discontinus (13) **caractérisé en ce que** :
- on entraîne et on rassemble de manière parallèle et alternée des filaments discontinus (13) de fibres de renforcement naturelles, sous la forme d'un faisceau (14);
- on fait pénétrer ledit faisceau (14) dans un dispositif de séparation faisceau / bois (300) où il subit une procédure de cryogénie;
- on introduit le faisceau séparé du bois (15) dans un dispositif d'imprégnation avec la matrice thermoplastique (400), tout en maintenant sa température à une température de malléabilité de ta matière thermoplastique, pour répartir de manière homogène la matière thermoplastique fondue et garantir la totale imprégnation des fibres de renforcement par celle-ci;
- on introduit le faisceau pré imprégné (16) dans un dispositif de conformation (500), tout en maintenant sa température à une température de malléabilité de la matière thermoplastique, de manière à obtenir un faisceau calibré (17) constitué par le rapprochement en contigu des filaments (13) formant une continuité transversale;
- on refroidit le faisceau (17) pour solidariser les fils entre eux en figeant la matière thermoplastique et on fixe ses caractéristiques dimensionnelles pour délivrer ledit fil ou ruban composite (50).

2. Procédé selon la revendication 1, **caractérisé, en ce que** les filaments (13) qu'on rassemble consistent en des filaments discontinus de fibres végétales et imprégnés de matière thermoplastique.

3. Procédé selon la revendication 2, **caractérisé en ce que** l'imprégnation s'effectue à partir d'une matière à base d'amidon (31 ou 32).

4. Procédé selon la revendication 1, **caractérisé en ce qu'**en fin de ligne de fabrication, le faisceau (17) est enroulé sous forme de bobine pour son stockage.

5. Dispositif de mise en oeuvre du procédé selon l'une quelconque des revendications 1 à 4, **caractérisé en ce qu'**il comprend :
- des moyens (102) pour entraîner et des moyens (201) pour rassembler sous forme de faisceau (14) les filaments discontinus (13) constitués de fibres naturelles,
- des moyens de séparation du faisceau et du bois (300);
- des moyens de mélange et de chauffage (400) pour imprégner les faisceaux de matière thermoplastique et garantir la totale imprégnation des filaments par celle-ci:
- un dispositif de conformation et de refroidissement (500) du faisceau (16) afin de le transformer en fil ou ruban (50).

6. Dispositif selon la revendication 5, **caractérisé en ce que** le dispositif de séparation (300) est un système de cryogénie.

7. Dispositif selon la revendication 6, **caractérisé en ce que** le dispositif de séparation (300) est un système mécanique de teillage.

8. Dispositif selon la revendication 5, **caractérisé en ce qu'**il comprend des moyens supplémentaires de chauffage (400) de manière à garder malléable la matière thermoplastique du faisceau pré imprégné (16) après le passage de celui-ci dans le dispositif d'imprégnation.

9. Dispositif selon la revendication 5, **caractérisé en ce que** des moyens de régulations de tension (102) des filaments (13) sont prévus en amont des moyens de rassemblement (201) et (202).

10. Dispositif selon la revendication 5, **caractérisé en ce qu'**il comporte en fin de ligne de fabrication et en aval des moyens d'entraînement un bobinoir (50) permettant d'enrouler le faisceau (17) sous forme de bobine.

11. Fil ou ruban obtenu selon le procédé de la revendication 1, **caractérisé en ce qu'**il constitue un produit solide et souple, présentant une conformation établie selon un nombre de tex et formant un matériau composite constitué de fibres naturelles discontinues de renforcement et de matière organique thermoplastique.

## Patentansprüche

1. Verfahren zur Herstellung eines Verbundgarns oder -bandes (50) auf der Grundlage von natürlichen Verstärkungsfasern (10) und eines thermoplastischen organischen Werkstoffs (31 oder 32), das darin besteht, eine Vielzahl von Nichtendlosfasern (13) zu vorimprägnieren und miteinander zu verbinden, **dadurch gekennzeichnet, dass**:
- Nichtendlos-Filamente (13) aus natürlichen Verstärkungsfasern in Form eines Bündels (14) parallel und alternierend gezogen und gesammelt werden;
- das genannte Bündel (14) in eine Bündel / Holz- Trennvorrichtung (300) eingeführt wird, wo es einem kryotechnischen Prozess unterzogen wird:
- das vom Holz (15) getrennte Bündel in eine Vorrichtung (400) zur Imprägnierung mit der thermoplastischen Matrix eingeführt wird, wobei seine Temperatur auf dem Verformbarkeitswert des thermoplastischen Werkstoffs gehalten wird, um den geschmolzenen themoplastischen Werkstoff gleichmäßig zu verteilen, und um die vollständige Imprägnierung der Verstärkungsfasern durch den thermoplastischen Werkstoff sicherzustellen;
- das vorimprägnierte Bündel (16) in eine Faserversammlungsvorrichtung (500) eingeführt wird, wobei gleichzeitig seine Temperatur in der Weise auf dem Verformbarkeitswert des thermoplastischen Werkstoffs gehalten wird, dass ein kalibriertes Bündel (17) erzielt wird, das durch die anstoßende Annäherung der Filamente (13) gebildet wird und zur Ausbildung einer quergerichteten Kontinuität führt;
- das Bündel (17) gekühlt wird, um die Fasern durch Erhärtung des thermoplastischen Werkstoffs miteinander zu verbinden, und dass man seine Abmessungseigenschaften festlegt, um das genannte Verbundgarn oder -band (50) auszubringen.

2. Verfahren gemäß dem Patentanspruch 1, **dadurch gekennzeichnet, dass** die Filamente (13), die versammelt werden, aus Nichtendlosfilamenten aus Pflanzenfasern bestehen, die mit einem thermoplastischen Werkstoff imprägniert werden.

3. Verfahren gemäß dem Patentanspruch 2, **dadurch gekennzeichnet, dass** die Imprägnierung ausgehend von einem Werkstoff auf Stärkebasis (31 oder 32) erfolgt.

4. Verfahren gemäß dem Patentanspruch 1, **dadurch gekennzeichnet, dass** das Bündel (17) am Ende der Fertigungslinie zum Zwecke der Einlagerung spulenförmig aufgerollt wird.

5. Vorrichtung zum Einsatz des Verfahrens gemäß einem beliebigen der Patentansprüche 1 bis 4, **dadurch gekennzeichnet, dass** sie folgendes umfasst:
- Vorrichtungen (102) zum Treiben und Vorrichtungen (201) zum Sammeln der aus natürlichen Fasern bestehenden Nichtendlos-Filamente (13) in Form eines Bündels (14);
- Vorrichtungen zum Trennen zwischen Bündel und Holz (300);
- Vorrichtungen zum Mischen und Erhitzen (400), um die Bündel mit thermoplastischem Werkstoff zu imprägnieren, und um die vollständige Imprägnierung der Filamente mit diesem sicherzustellen;
- eine Ausbildungs- und Kühlvorrichtung (500) für das Bündel (16), um dieses in eine Faser oder ein Band (50) umzuwandeln.

6. Vorrichtung gemäß dem Patentanspruch 5, **dadurch gekennzeichnet, dass** die Trennvorrichtung(300) ein kryotechnisches System ist.

7. Vorrichtung gemäß dem Patentanspruch 6, **dadurch gekennzeichnet, dass** die Trennvorrichtung (300) ein mechanisches Brech- und Abbastsystem ist.

8. Vorrichtung gemäß dem Patentanspruch 5, **dadurch gekennzeichnet, dass** sie zusätzliche Erhitzungsvorrichtungen (400) in der Weise umfasst, dass der thermoplastische Werkstoff des vorimprägnierten Bündels (16) verformbar gehalten wird, nachdem das Bündel in die Imprägnierungsvorrichtung eingelaufen ist.

9. Vorrichtung gemäß dem Patentanspruch 5, **dadurch gekennzeichnet, dass** zur Regelung der Spannung (102) der Filamente (13) Vorrichtungen vorgesehen sind, und zwar vor den Versammlungsvorrichtungen (201) und (202).

10. Vorrichtung gemäß dem Patentanspruch 5, **dadurch gekennzeichnet, dass** sie am Ende der Fertigungslinie und vor den Antriebsvorrichtungen eine Spuleinrichtung (50) umfasst, mit der das Bündel (17) spulenförmig aufgewickelt werden kann.

11. Gemäß dem Verfahren nach Patentanspruch 1 erzieltes Garn oder Band, **dadurch gekennzeichnet, dass** es ein starkes und flexibles Produkt darstellt, welches nach einem Tex-Wert ausgebildet ist und einen Verbundwerkstoff bildet, der aus natürlichen Nichtendlos-Verstärkungsfasern und organischem thermoplastischem Werkstoff besteht.

## Claims

1. Process for manufacturing a composite yarn or tape (50) based on natural reinforcing fibres (10) and on thermoplastic organic material (31 or 32), consisting in pre-impregnating and bonding together a multiplicity of discontinuous yarns (13), **characterized in that**:
- discontinuous filaments (13) of natural reinforcing fibres are conveyed and assembled in a parallel and alternate manner in the form of a bundle (14);
- said bundle (14) is fed into a bundle/wood separation device (300) where it is subjected to a cryogenic procedure;
- the wood-free bundle (15) is introduced into an impregnation device (400) with the thermoplastic matrix, while maintaining its temperature at a temperature at which the thermoplastic material is malleable, in order to uniformly distribute the molten thermoplastic material and guarantee the complete impregnation of the reinforcing fibres thereby;
- the pre-impregnated bundle (16) is introduced into a shaping device (500), while maintaining its temperature at a temperature at which the thermoplastic material is malleable, so as to obtain a sized bundle (17) formed by bringing the filaments (13) together so as to be touching, thereby creating transverse continuity;
- the bundle (17) is cooled in order to bond the yarns together by setting the thermoplastic material and its dimensional characteristics are fixed in order to deliver said composite yarn or tape (50).

2. Process according to Claim 1, **characterized in that** the filaments (13) that are assembled consist of discontinuous plant fibre filaments that are impregnated with thermoplastic material.

3. Process according to Claim 2, **characterized in that** the impregnation is carried out using a starch-based material (31 or 32).

4. Process according to Claim 1, **characterized in that** at the end of the production line, the bundle (17) is wound in the form of a reel for the storage thereof.

5. Device for implementing the process according to any one of Claims 1 to 4, **characterized in that** it comprises:
- means (102) for conveying the discontinuous filaments (13) consisting of natural fibres and means (201) for assembling them in the form of a bundle (14);
- bundle/wood separation means (300);
- mixing and heating means (400) for impregnating the bundles with thermoplastic material and guaranteeing the complete impregnation of the filaments thereby;
- a device (500) for shaping and cooling the bundle (16) in order to convert it into yarn or tape (50).

6. Device according to Claim 5, **characterized in that** the separation device (300) is a cryogenic system.

7. Device according to Claim 6, **characterized in that** the separation device (300) is a mechanical stripping system.

8. Device according to Claim 5, **characterized in that** it comprises additional heating means (400) so as to keep the thermoplastic material of the pre-impregnated bundle (16) malleable after the passage thereof into the impregnation device.

9. Device according to Claim 5, **characterized in that** means (102) for regulating the tension of the filaments (13) are provided upstream of the assembling means (201) and (202).

10. Device according to Claim 5, **characterized in that** it comprises, at the end of the production line and downstream of the conveying means, a winder (50) that makes it possible to wind the bundle (17) in the form of a reel.

11. Yarn or tape obtained according to the process of Claim 1, **characterized in that** it constitutes a solid and flexible product, having a shape established according to a number of tex and forming a composite material consisting of reinforcing discontinuous natural fibres and of thermoplastic organic material.
